**Europäisches Patentamt**

**European Patent Office**

**Office européen des brevets**

(19)

(11) Veröffentlichungsnummer : **0 137 186 B1**

(12) **EUROPÄISCHE PATENTSCHRIFT**

(45) Veröffentlichungstag der Patentschrift :
23.03.88

(21) Anmeldenummer : 84109331.3

(22) Anmeldetag : 07.08.84

(51) Int. Cl.⁴ : **F 15 B 11/16, B 62 D 5/06**

(54) **Hydrauliksystem mit einer Pumpe mit unveränderlicher Fördermenge und einem Vorrangventil.**

(30) Priorität : 12.08.83 US 522920

(43) Veröffentlichungstag der Anmeldung :
17.04.85 Patentblatt 85/16

(45) Bekanntmachung des Hinweises auf die Patenterteilung : 23.03.88 Patentblatt 88/12

(84) Benannte Vertragsstaaten :
**AT BE CH DE FR GB IT LI NL SE**

(56) Entgegenhaltungen :
**EP-A- 0 061 005
EP-A- 0 137 185
US-A- 4 034 563
US-A- 4 337 620
US-A- 4 343 151**

(73) Patentinhaber : **DEERE & COMPANY
1 John Deere Road
Moline Illinois 61265 (US)**

(72) Erfinder : **Miller, James Anton
1727 Four Winds Dr.
Cedar Falls Iowa 50613 (US)**
Erfinder : **Eagles, Derek Malcolm
107 Rebecca Road
Hudson Iowa 50643 (US)**

(74) Vertreter : **Feldmann, Bernhard et al
DEERE & COMPANY European Office, Patent Department Steubenstrasse 36-42 Postfach 503
D-6800 Mannheim 1 (DE)**

## Beschreibung

Die Erfindung bezieht sich auf ein Hydrauliksystem mit einer Pumpe mit unveränderlicher Fördermenge, einem Vorrangventil, einem Ventil zum Steuern des Zuflusses zu einem bevorrechtigten Verbraucher, einer Zuführleitung zu diesem Ventil und einer Signalleitung, wobei das Vorrangventil in Abhängigkeit von dem Druck in der Signalleitung verstellbar ist, die Zuführleitung an die Pumpe sowie ein Sekundärkreis an das Vorrangventil angeschlossen sind und die Signalleitung bei aus seiner Neutralstellung verschobenem Ventil mit der Druckseite des bevorrechtigten Verbrauchers verbunden ist.

Bei derartigen Hydrauliksystemen dient der Primärkreis vorzugsweise zum Beaufschlagen einer hydrostatischen Lenkung, bei der sich das Ventil bei nichtbewegtem Lenkrad in seiner Neutralstellung befindet, in der der Zulauf zum bevorzugten Verbraucher unterbrochen ist. Befindet sich das Ventil aber in einer seiner Arbeitsstellungen, in der ein Beaufschlagen des Verbrauchers über die Pumpe erfolgt, so kann es vorkommen, daß im Falle der Lenkung die Räder beim Einschlagen auf ein Hindernis treffen und damit im Verbraucher eine Gegenkraft auslösen, die größer ist als der Pumpendruck. Dadurch entsteht im Hydrauliksystem ein Rückfluß, der das Lenkrad für die Bedienungsperson ganz unerwartet plötzlich zurückdreht. Wegen der damit verbundenen Gefahren ist dies natürlich unerwünscht.

Bei dem bekannten Hydrauliksystem (EP-A-0 061 005) läuft die Ölverbindung zu dem bevorrechtigten Verbraucher immer über das Vorrangventil, was aus Sicherheitsgründen zu vermeiden ist. Hinzu kommt, daß bei von außen auf den bevorrechtigten Verbraucher einwirkenden Kräften Rückdrücke entstehen können, die den Pumpendruck überwinden, so daß im Hydrauliksystem unter Druck stehende Rückflüsse auftreten können.

Die mit der Erfindung zu lösende Aufgabe wird darin gesehen, bei den Pumpendruck übersteigenden Gegendrücken am Verbraucher einen Rückfluß zu vermeiden.

Diese Aufgabe ist gemäß der Erfindung dadurch gelöst worden, daß die Zuführleitung an das Ventil angeschlossen ist und eine weitere Zuführleitung, in der das Vorrangventil vorgesehen ist, die Pumpe mit dem Sekundärkreis verbindet, der ein Stellventil aufweist, wobei das Vorrangventil zwischen einer offenen und einer geschlossenen Stellung verstellbar und die Signalleitung blockierbar ist, sobald der in ihr herrschende Druck größer ist als der über die Zuführleitung zum bevorrechtigten Verbraucher gelieferte Druck. Auf diese Weise wird, wenn das Ventil beispielsweise durch ein Drehen des Lenkrades in eine Stellung gebracht wurde, in der die Pumpe mit dem Verbraucher über die Zuführleitung und die Signalleitung verbunden ist, die Signalleitung sofort blockiert, sobald an dem Verbraucher eine Kraft wirkt, die größer ist als der Pumpendruck.

Damit wird ein eventuell auftretender Rückdruck sofort in der Signalleitung aufgefangen und kann keine schädlichen Wirkungen entfalten. Hinzu kommt, daß bei diesem offenen Hydrauliksystem das zum bevorrechtigten Verbraucher führende Ventil immer mit der ersten Zuführleitung in Verbindung steht.

Vorteilhaft kann an der der Signalleitung abgelegenen Seite des Vorrangventils eine Pilotleitung angreifen, die stromaufwärts des Vorrangventils an die weitere Zuführleitung angeschlossen ist und über deren Pilotdruck das Vorrangventil aus seiner geschlossenen Stellung in seine offene Stellung verschiebbar ist. Auf diese Weise wird sich das Vorrangventil in Abhängigkeit von den an seinen Seiten anstehenden Drücken selbsttätig verstellen, wobei an der Seite, an der die Signalleitung anliegt, noch eine Feder angreift und die Signalleitung eine Blende aufweist und ein Überströmventil, das zum Vorrangventil parallel geschaltet ist.

Nach einem weiteren Merkmal der Erfindung kann ein Steuerventil in der Signalleitung vorgesehen sein, das über den Druck in der ersten Zuführleitung verstellbar ist und bei einem Druck in der Signalleitung, der größer ist als der Druck in der ersten Zuführleitung, in eine erste Stellung verstellbar ist, in der die Verbindung der Signalleitung zwischen Vorrangventil und Ventil unterbrochen ist. Damit wird das Steuerventil so eingesetzt, daß es in einfacher Weise den Rückdruck auffangen kann. Gleichzeitig dient es dazu, das Vorrangventil mit unterschiedlichen Drücken zu beaufschlagen, wenn nach der Erfindung das Steuerventil in seiner ersten Stellung die erste Zuführleitung mit dem Abschnitt der Signalleitung verbindet, der zwischen dem Steuerventil und dem Vorrangventil liegt.

Ist das Ventil im Primärkreis mit einer Rücklaufleitung versehen, so kann nach einem weiteren Vorschlag der Erfindung das Stellventil in seiner Neutralstellung die weitere Zuführleitung über eine vierte Leitung mit der Rücklaufleitung verbinden. Hierdurch wird erreicht, daß in der Neutralstellung des Ventils im Primärkreis, in der das Steuerventil bei arbeitender Pumpe die Zuführleitung mit dem Abschnitt der Signalleitung zwischen Steuerventil und Vorrangventil verbindet, das Vorrangventil in eine Stellung verstellt wird, in der die Pumpe mit der weiteren Zuführleitung verbunden ist, so daß auf zusätzliche Überströmventile verzichtet werden kann.

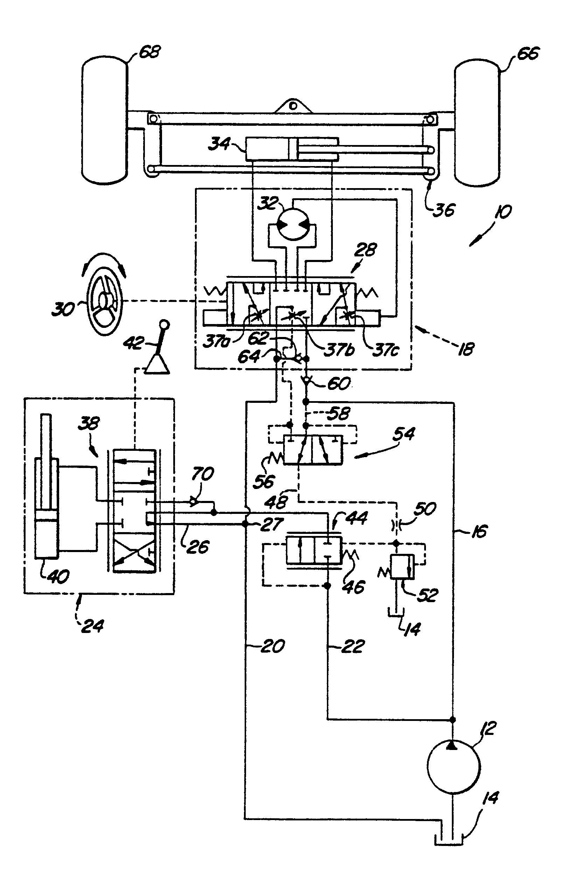

In der Zeichnung ist ein nachfolgend näher erläutertes offenes Hydrauliksystem dargestellt.

Dieses Hydrauliksystem ist in seiner Gesamtheit mit 10 bezeichnet und dient primär zum Steuern der Lenkung eines Kraft- oder Arbeitsfahrzeuges, insbesondere eines Ackerschleppers oder einer Baumaschine. Natürlich ist der Einsatz nicht auf die Steuerung der Lenkung begrenzt, da auch andere Aggregate anstelle der Lenkung Verwendung finden können. Nur werden diese Aggregate immer bevorzugt mit Druckflüssigkeit versorgt. Im einzelnen weist das Hydrauliksystem eine Pumpe 12 mit unveränderlicher Fördermenge auf, die Flüssigkeit aus einem Sammelbehälter 14 ansaugt und unter Druck stehende Flüssigkeit über eine 1. Leitung 16 an einem bevorzugten Arbeitskreis 18 abgeben kann. Drucklose oder Rücklaufflüssigkeit gelangt über eine 2. Leitung 20 zurück zum Sammelbehälter 14. Die Pumpe 12 kann ferner noch über eine 3. Leitung 22, die an die Leitung 16 angeschlossen ist, einen Sekundärkreis 24 versorgen, der über eine 4. Leitung 26, die an der Verbindungsstelle 27 in die 2. Leitung 20 mündet, mit dem Sammelbehälter 14 in Verbindung steht.

Der bevorzugte Arbeitskreis 18 genießt immer Priorität, das heißt, sein Verbraucher wird bei Bedarf immer bevorzugt mit unter Druck stehender Flüssigkeit versorgt, damit seine Funktion auch bei druckbeaufschlagtem Verbraucher im Sekundärkreis stets gewährleistet ist. Im dargestellten Ausführungsbeispiel ist der Arbeitskreis 18 mit einem Steuerventil 28 versehen, das über ein von Hand betätigbares Lenkrad 30 und einen durch Flüssigkeit aktivierten Drehkörper 32 oder dergleichen verstellbar ist und das Druckflüssigkeit den beiden Enden eines Hydraulikzylinders 34 zuführen kann, der dann ein Lenkgestänge 36 entsprechend verstellt. In der Zeichnung sind die Verbindungsleitungen zwischen Steuerventil 28, Hydraulikzylinder 34 und Drehkörper 32 sowie die Verbindung zwischen Hydraulikzylinder und Lenkgestänge schematisch dargestellt. Die Funktion entspricht der üblichen. Zu erwähnen bleibt lediglich, daß das als Dreistellungsventil ausgebildete Steuerventil 28 mit drei vorzugsweise verstellbaren Blenden 37 a, b und c versehen ist, die zum Dosieren des Flüssigkeitsdurchflusses dienen.

In dem Sekundärkreis 24 ist ein Stellventil 38 vorgesehen, das über Leitungen mit den beiden Enden eines weiteren Hydraulikzylinders 40 verbunden ist. Dieser kann vielen Anwendungen dienen. Eine davon wäre das Anheben und Absenken eines an das Fahrzeug anbaubaren Gerätes. Vorzugsweise ist das Stellventil 38 über einen Hebelmechanismus 42 verstellbar. Es kann aus einer Neutralstellung in jeweils zwei Endstellungen verstellt werden, in denen dann jeweils ein Ende des weiteren Hydraulikzylinders 40 mit der Pumpe 12 und das andere Ende mit dem Sammelbehälter 14 verbunden sein kann.

Ein Vorrangventil 44 ist in der 3. Leitung 22, die auch als 2. Zuführleitung bezeichnet werden kann, vorgesehen und zwischen einer offenen und einer geschlossenen Stellung verschiebbar. Es dient zum Steuern des Flüssigkeitsdruckes zu dem bevorzugten Arbeitskreis 18 durch Drosseln des Flüssigkeitsflusses von der Pumpe 12 zum Sekundärkreis, sofern der Arbeitskreis 18 benötigt wird. Über eine Feder 46, die an seiner rechten Seite angreift, wird das Vorrangventil 44 in Richtung auf seine geschlossene Stellung gedrückt. Dabei wird der Zufluß zum Sekundärkreis 24 zunächst gedrosselt und schließlich ganz unterbrochen. An der der Feder 46 abgelegenen linken Seite des Vorrangventils 44 ist eine Pilotleitung angeschlossen, die anderenends stromaufwärts des Vorrangventils an die Leitung 22 angeschlossen ist, so daß der Druck in der Leitung 22 vor dem Vorrangventil auf dessen linke Seite wirkt und bestrebt ist, das Vorrangventil 44 in seine offene Stellung zu verstellen, in der der Zufluß zum Sekundärkreis 24 ungedrosselt oder nur geringfügig gedrosselt erfolgt.

Das offene Hydrauliksystem 10 ist des weiteren mit einer Signalleitung 48 ausgerüstet, die das Steuerventil 28 mit der rechten Seite des Vorrangventils 44 verbindet. Sie überträgt Drucksignale, die von der Last, die am Hydraulikzylinder 34 angreift, ausgehen, auf die rechte Seite des Vorrangventils 44, so daß der dann dort herrschende Flüssigkeitsdruck zusammen mit der Kraft der Feder 46 bestrebt ist, das Vorrangventil 44 in Richtung auf seine geschlossene Position zu verstellen. Sobald an der rechten Seite des Vorrangventils 44 ein Druck aufgebaut wird, verschiebt sich das Vorrangventil nach links in Richtung auf seine geschlossene Stellung, wobei der Zufluß zum Sekundärkreis 24 gedrosselt wird. Diese Drosselung bewirkt, daß der Druck in dem Leitungsstück der Leitung 22 vor dem Vorrangventil und in der Leitung 16 ansteigt, da die Pumpe 12 eine konstante Fördermenge fördert. Damit wirken der Flüssigkeitsdruck in der Signalleitung 48 und die Kraft der Feder 46 mit der Pumpe 12 zusammen, um den Zufluß zu dem Sekundärkreis 24 zu drosseln, wobei der Flüssigkeitsdruck in dem bevorzugten Arbeitskreis 18 reguliert wird. Hierdurch ist gewährleistet, daß die Pumpe 12 dem Arbeitskreis 18 stets eine ausreichende Flüssigkeitsmenge sowie ausreichend hohen Druck zur Verfügung stellt.

In der Signalleitung 48 sind eine Blende 50 zum Dosieren der Flüssigkeit und ein Überströmventil 52 vorgesehen. Letzteres ist zu dem Vorrangventil 44 parallel geschaltet, wird durch eine Feder in seiner geschlossenen Stellung gehalten und kann über den Flüssigkeitsdruck stromabwärts der Blende 50 in eine Offenstellung gebracht werden, in der dann Flüssigkeit in den Sammelbehälter 14 gelangen kann. Damit öffnet das Überströmventil nur in Abhängigkeit von einem vorgegebenen Wert und die überströmende Flüssigkeit kann wieder verwendet werden.

Bei derartigen bevorzugten Arbeitskreisen für eine Lenkung kann, wenn ein Rückdruck, der größer ist als der Pumpendruck am Hydraulikzylinder 34, und ein Rückfluß durch den Drehkörper 32 in Kombination auftreten, es vorkommen, daß eine Drehkraft erzeugt wird, die das Lenkrad 30 ruckartig in einem Drehsinn dreht, der dem von der Bedienungsperson gewählten entgegengesetzt ist. Dadurch muß die Lenkstellung wieder berichtigt werden. Beides ist unerwünscht. Dies wird im vorliegenden Fall unter anderem durch ein Signalsteuerventil 54 vermieden, das in der Signalleitung 48 zwischen dem Arbeitskreis 18 und der Blende 50 vorgesehen ist. Es ist als Dreiwege-Zweistellungsventil ausgebildet und kann durch die Kraft einer Feder 56 und den Druck in der Signalleitung 48, deren Leitungsstück zwischen Steuerventil 28 und Signalsteuerventil 54 hierzu über einen Abzweig mit der linken Seite des Signalsteuerventils 54 verbunden ist, in einer ersten in der Zeichnung gezeigten Stellung gehalten werden, in der die Leitung 16 mit dem Leitungsstück der Signalleitung 48 zwischen dem Signalsteuerventil 54 und der Blende 50 verbunden ist. Die Leitung 16 ist hierzu über eine Zwischenleitung 58 an das Signalsteuerventil 54 angeschlossen. Von der Zwischenleitung 58 führt noch ein weiterer Abzweig zu der rechten Seite des Signalsteuerventils 54, so daß dieses über den in der Leitung 16 herrschenden Druck in eine zweite Stellung verschoben werden kann, in der das Steuerventil 28 mit der rechten Seite des Vorrangventils 44 und mit dem Überströmventil 52 verbunden ist.

Das Signalsteuerventil 54 kann auf Druckänderungen der Flüssigkeit in der 1. Leitung 16 und in der Signalleitung 48 ansprechen und kann aufgrund solcher Druckänderungen einen Flüssigkeitsrückfluß aus dem 1. Arbeitskreis 18 verhindern, wenn der Flüssigkeitsdruck in der 1. Leitung 16 geringer ist als der Flüssigkeitsdruck in der Signalleitung 48, oder wenn eine äußere Stellkraft auf den Hydraulikzylinder 34 einwirkt, die größer ist als der dort herrschende Flüssigkeitsdruck. Dadurch, daß ein Flüssigkeitsfluß aus dem Steuerventil 28 verhindert wird, eliminiert man diesen Flüssigkeitsweg für Rückflüssigkeitsfluß durch den Drehkörper 32. In dem Hydrauliksystem 10 ist ferner noch ein Rückschlagventil 60 vorgesehen, das in dem Leitungsstück der 1. Leitung 16 angeordnet ist, das das Steuerventil 28 mit der Anschlußstelle der Zwischenleitung 58 verbindet. Dieses Rückschlagventil 60 ist so angeordnet, daß es einen Rückfluß der Flüssigkeit aus dem Steuerventil 28 bzw. dem 1. Arbeitskreis durch die 1. Leitung verhindert. Damit wirken das Signalsteuerventil 54 und das Rückschlagventil 60 zusammen, um das selbsttätige Zurückdrehen des Lenkrades und die Berichtigung der Lenkstellung am Lenkrad 30 zu vermeiden.

Ein weiteres Rückschlagventil 62 ist in einer Leitung 64 vorgesehen, die die 1. Leitung 16 mit der zweiten Leitung 20 verbindet. Das Rückschlagventil 62 ist dabei so angeordnet, daß es einen Flüssigkeitsfluß von der 2. Leitung zu der 1. Leitung erlaubt, sofern aufgrund der Drehung am Lenkrad 30 ein größerer Flüssigkeitsbedarf erforderlich wird, als er von der Pumpe 12 geliefert werden kann. Sollte dies auftreten, beispielsweise, wenn der Motor bei abgeschlepptem Fahrzeug stillsteht, so wird Flüssigkeit, die normalerweise in den Sammelbehälter zurückströmt, dazu verwendet, die 1. Leitung aufzufüllen, so daß in der 1. Leitung keine Kavitation auftritt.

Rechte und linke Räder sind mit 66 und 68 bezeichnet und mit dem Lenkgestänge 36 verbunden. Schließlich ist dem Sekundärkreis 24 noch ein Rückschlagventil 70 zugeordnet, das in einer Zuführleitung zu dem Sekundärkreis vorgesehen ist und verhindert, daß in dieser Flüssigkeit zurückströmt.

## Arbeitsweise

In der nachfolgenden Erläuterung des Hydrauliksystems 10 werden Drücke angegeben, bei denen die verschiedenen Ventile ansprechen. Diese Werte sind rein hypothetisch, und die Erfindung soll durch diese Werte nicht eingeengt werden.

Bei nichtlaufendem Motor des Kraftfahrzeuges wird die Pumpe 12 nicht angetrieben. Das Steuerventil 28 befindet sich dabei in seiner in der Zeichnung wiedergegebenen Neutralstellung, der Hydraulikzylinder 34 ist nicht druckbeaufschlagt, das Vorrangventil 44 befindet sich in seiner geschlossenen und dargestellten Stellung und das Signalventil 54 befindet sich in seiner ersten Stellung, die in der Zeichnung dargestellt ist. Sobald nun der Motor angelassen wird, wird die Pumpe 12 angetrieben und über die Leitung 16 zunächst unter geringem Druck stehende Flüssigkeit zu dem Steuerventil 28 und über die Leitung 22 zu dem Vorrangventil 44 fördern. Befindet sich das Steuerventil 28 dann aber noch in seiner Neutralstellung, so wird der Flüssigkeitsfluß hier blockiert und der Flüssigkeitsdruck in der Leitung 16 steigt an. Gleichzeitig werden die rechte und linke Seite des Vorrangventils 44 und die rechte Seite des Signalsteuerventils 54 mit Druck beaufschlagt, der aber noch nicht groß genug ist, um das Vorrangventil 44 und das Signalsteuerventil 54 aus ihren in der Zeichnung wiedergegebenen ersten Stellungen zu verschieben. Unterstellt man, daß zum Zusammenschieben der Feder 56 am Signalsteuerventil 54 ein Druck von 50 psi (3,4 bar) erforderlich ist, so wird sich das Signalsteuerventil 54 in seine zweite Stellung verschieben, wenn der Druck in der Leitung 16 auf über 50 psi (3,4 bar) ansteigt. Dieser Druck reicht aber noch nicht aus, um die Kraft der Feder 46 am Vorrangventil 44 zu überwinden, so daß dieses dann noch in seiner ersten Stellung verbleibt. Da die Pumpe 12 konstant fördert und das Steuerventil 28 den Flüssigkeitsfluß blockiert, steigt der Druck im Hydrauliksystem weiter an. Erreicht nun der Druck im Hydrauliksystem 10 einen Wert, der etwas über 50 psi (3,4 bar) liegt, so verschiebt sich das Signalsteuerventil 54 in seine zweite Stellung und unterbricht dabei die Verbindung zwischen der Zwischenleitung 58 und dem Leitungsstück der Signalleitung 48 zwischen dem Signalsteuerventil 54 und der Blende 50 und verbindet stattdessen dieses Leitungsstück mit dem Leitungsstück der Signalleitung 48 zwischen dem Signalventil 54 und dem Steuerventil 28, so daß der Druck in der Signalleitung 48 sich abbaut, da nunmehr über die Blende 37 b eine Verbindung mit der 2. Leitung 20 geschaffen ist, die zum Sammelbehälter 14 führt. Bei diesen Bedingungen befindet sich das Vorrangventil 44 immer noch in seiner ersten Stellung, da zum Überwinden der Kraft der Feder 46 ein Druck von etwa 150 psi (10,3 bar) erforderlich ist. Steigt nun der Druck auf einen Wert von etwas über 150 psi (10,3 bar) an, so wird der am linken Ende des Vorrangventils 44 über die Pilotleitung sich aufbauende Druck die Kraft der Feder 46 überwinden und das Vorrangventil 44 nach rechts in Richtung auf seine Offenstellung verschieben. In der Offenstellung ist dann die Pumpe 12 sowohl mit der Leitung 16 als auch mit dem Sekundärkreis verbunden. Befindet sich aber jetzt das Stellventil 38 noch in seiner gezeigten Neutralstellung, so kann kein Druck zu dem Hydraulikzylinder 40 von der Pumpe 12 gelangen. Über die 4. Leitung 26 wird stattdessen der Flüssigkeitsstrom in der Leitung 22 zu der mit dem Sammelbehälter 14 verbundenen Leitung 20 geführt. Das offene Hydrauliksystem 10 befindet sich jetzt in Bereitschaftsstellung und die Pumpe 12 arbeitet im wesentlichen nur noch gegen den Druck der Feder 46.

Lenkbetätigung bei normalen Bedingungen

Unterstellt man ferner, daß sich das Stellventil 38 noch in seiner Neutralstellung befindet, am bevorzugten Arbeitskreis 18 infolge Betätigung des Lenkrads 30 aber ein Flüssigkeitsbedarf entsteht, wobei in der Bereitschaftsstellung Flüssigkeit sowohl zum Steuerventil 28 als auch wegen des sich in seiner Offenstellung befindlichen Vorrangventils 44 zum Stellventil 38 geleitet wird, das Signalsteuerventil 54 sich aber noch in seiner zweiten Stellung befindet, so wird sich das Steuerventil 28 aus seiner Neutralstellung in eine seiner Endstellungen verschieben, je nachdem ob eine Rechts- oder eine Linkskurve zu durchfahren ist. Für eine Rechtskurve — also einen Radeinschlag nach rechts — wird das Lenkrad 30 im Uhrzeigerdrehsinn gedreht und das Steuerventil 28 wird sich nach rechts in seine linke Endstellung verschieben. Dadurch wird die 1. Leitung 16 über die Blende 37 a im Steuerventil 28 mit der linken Seite des Drehkörpers 32 und mit der Signalleitung 48 verbunden, die dann nicht mehr mit der 2. Leitung 20 in Verbindung steht. Wird die linke Seite des Drehkörpers mit der Leitung 16 verbunden, so wird seine rechte Seite über das Steuerventil 28 mit dem kolbenseitigen Ende des Hydraulikzylinders 34 verbunden und diese Seite druckbeaufschlagen. Das zylinderseitige Ende des Hydraulikzylinders ist dann mit der 2. Leitung 20 und somit mit dem Sammelbehälter 14 verbunden. Die Blenden 37 a und 37 c sind in den Zuflußkanälen zu dem Drehkörper 32 vorgesehen, wobei hinter den Blenden oder stromabwärts zu diesen Verbindungskanäle in die Zuflußkanäle münden, die anderenends zur Pumpenseite offen sind. Geht man davon aus, daß zum Verstellen des Hydraulikzylinders 34 und damit der Räder 66 und 68 ein Druck von 900 psi (62 bar) erforderlich ist, so muß sich zunächst der Druck der Pumpe 12 vom Bereitschaftsdruck von 150 psi (10,3 bar) auf 900 psi (62 bar) erhöhen, damit eine Lenkwirkung eintritt. Solange der Druck den Wert von 900 psi (62 bar) nicht erreicht, tritt keine Verstellung des Kolbens im Hydraulikzylinder 34 ein und die Druckflüssigkeit strömt über die Blende 37 a und die Signalleitung 48 zum Überströmventil 52 und gleichzeitig zum linken Ende des Signalsteuerventils 54. Der sich dort aufbauende Druck wird infolge der Blende 37 a geringer sein als an der rechten Seite des Signalsteuerventils, aber aufgrund der Feder 56 das Signalsteuerventil 54 in seine erste dargestellte Stellung zurückstellen, in der dann der Durchfluß im Signalsteuerventil 54 von dem Steuerventil 28 zur Blende 50 unterbrochen und eine Verbindung der Zwischenleitung 58 mit dem Leitungsstück zwischen Signalsteuerventil 54 und Blende 50 hergestellt ist. Dadurch kann sich am rechten Ende des Vorrangventils 44 wieder ein Druck aufbauen, der zusammen mit der Kraft der Feder 46 beginnt, das Vorrangventil 44 wieder in seine gezeigte Stellung nach links gegen den Druck in der Pilotleitung zurückzuschieben. Der Zufluß zu dem Sekundärkreis 24 wird dabei gedrosselt und der Druck in der 1. Leitung 16 und dem Leitungsstück der Leitung 22 vor dem Vorrangventil steigt weiter an bis er die 900 psi (62 bar) erreicht, wobei sich das Vorrangventil 44 ganz in seine geschlossene Stellung verstellt. Damit kann der Druck im Hydrauliksystem 10 bzw. in der Leitung 16 weiter ansteigen, wobei das Vorrangventil 44 in seiner Stellung verbleibt, solange das Signalsteuerventil 54 in seiner ersten Stellung sich befindet, da dem am linken Ende des Vorrangventils 44 herrschenden Systemdruck der Systemdruck am rechten Ende des Vorrangventils zuzüglich der Kraft der Feder 46 jedoch abzüglich der Drosselverluste an der Blende 50 entgegenwirkt. Die Summe der Kräfte am rechten Ende des Vorrangventils 44 ist dabei größer als der Systemdruck. Sobald der Druck in der Leitung auf einen Wert von etwa 950 psi (65,5 bar) ansteigt, wird das Signalsteuerventil 54 wieder in seine zweite Stellung verschoben, da dann die Verluste an der Blende 37 a etwa 50 psi (3,4 bar) betragen, so daß am linken Ende des Signalsteuerventils 54 dann ein Druck von 900 psi (62 bar) herrscht, der zusammen mit der Kraft der Feder 56 nicht ausreicht, das Signalsteuerventil 54 in seiner ersten Stellung zu halten. Der Druck in der Leitung 16 wird weiter ansteigen auf etwa 1050 psi (72,4 bar) und entspricht dann in etwa 900 psi, (62 bar) die von der Lenkung durch die Signalleitung 48 kommend zuzüglich 150 psi (10,3 bar), die die Kraft der Feder 46 repräsentieren, an der rechten Seite des Vorrangventils 44 anliegen. Solange, wie die Bedienungsperson das Lenkrad 30 im Uhrzeigerdrehsinn weiterdreht, werden diese Bedingungen aufrechterhalten.

Sobald mit dem Drehen des Lenkrades 30 aufgehört wird, verschiebt sich das Steuerventil 28 wieder in seine Neutralstellung, in der die Signalleitung 48 über die Blende 37 a mit der 2. Leitung 20 verbunden ist, so daß die Flüssigkeit, die am rechten Ende des Vorrangventils 44 ansteht, wieder zurück in den Sammelbehälter 14 gelangt. Der Druck in der Signalleitung 48 fällt dabei auf etwa 0 ab. Sobald der Druck in der Signalleitung abfällt, wird der an der linken Seite des Vorrangventils 44 anstehende Druck das Vorrangventil 44 nach rechts in seine Offenstellung verschieben, da in der Leitung 22 Druck herrscht. Bei dem Öffnen des Vorrangventils 44 wird die Drosselung zwischen der Pumpe 12 und dem Sekundärkreis reduziert, so daß im Ganzen gesehen das System sich wieder in Bereitschaftsstellung befindet.

Lenkung, wenn eine äußere Kraft auf beide oder eines der Räder einwirkt.

Beim Fahren in einer Rinne oder dergleichen kann es vorkommen, daß beim Lenkeinschlag auf mindestens eines der Räder eine äußere Kraft dadurch einwirkt, daß das Rad gegen die Rinnenwand schlägt. Diese Kraft kann dann der Lenkbewegung entgegengesetzt sein und den Hydraulikzylinder 34 bzw. seinen Kolben gegen den Pumpendruck verstellen. Wären nach der Erfindung keine besonderen Vorkehrungen hiergegen getroffen, so würde sich der Kolben dann in eine dem Pumpendruck entgegengesetzte Richtung bewegen, d. h. die unter Druck stehende Flüssigkeit würde entgegengesetzt bewegt und dadurch den Drehkörper 32 in entgegengesetzter Richtung und damit auch das an diesem angreifende Lenkrad 30 bewegen. Dadurch entsteht die bereits vorerwähnte Lenkradrückdrehung, die plötzlich und in der Regel unerwartet auftritt und damit die Bedienungsperson überrascht. Je nach den auftretenden Kräften, kann die Bedienungsperson diese Lenkradrückdrehung nicht verhindern, auch wenn sie das Lenkrad 30 mit aller Kraft festhält. Die dadurch entstehenden Gefahren sind offensichtlich.

Bei der erfindungsgemäßen Ausführungsform wird diese Lenkradrückdrehung vermieden. Bei einer Drehung des Lenkrades 30 im Uhrzeigerdrehsinn für eine Fahrtrichtungsänderung nach rechts ist die Leitung 16, wie es vorstehend bereits ausgeführt wurde, über die Blende 37a im Steuerventil 28 mit dem Drehkörper 32 und dem Hydraulikzylinder 34 verbunden, so daß dessen kolbenseitiges Ende mit unter Druck stehender Flüssigkeit beaufschlagt wird, während sein zylinderseitiges Ende über das Steuerventil 28 mit der Leitung 20 und damit mit dem Sammelbehälter verbunden ist. Trifft nun eines der Räder 66 oder 68 auf ein Hindernis auf, das eine Gegenkraft erzeugt und das einschlagende Rad und damit den Kolben im Hydraulikzylinder 34 zurückstellen will, so entsteht im Drehkörper und in der Leitung 16 sowie in der Signalleitung 48 ein Rückdruck. In der Leitung 16 wird dieser Rückdruck durch das Rückschlagventil 60 aufgefangen. In der Signalleitung 48 bewirkt der Rückdruck ein sofortiges Verschieben des Signalsteuerventils 54 in seine erste und gezeigte Position, so daß die Verbindung mit der rechten Seite des Vorrangventils 44 hier unterbrochen wird. Die rechte Seite ist dann wieder an die Zwischenleitung 58 angeschlossen. Das sofortige Verstellen des Signalsteuerventils 54 wird dadurch bewirkt, daß der Rückdruck infolge der besonderen Anordnung der Blende 37 a in die Signalleitung ungedrosselt eintritt. Da das Rückschlagventil 60 stromabwärts der Zwischenleitung 58 vorgesehen ist, kann sich der Rückdruck nicht bis zum rechten Ende des Signalsteuerventils 54 fortpflanzen, so daß an der linken Seite des Signalsteuerventils eine Druckerhöhung auftritt, die zusammen mit der Kraft der Feder 56 das Signalsteuerventil 54 in seine erste Stellung verstellt und damit die Signalleitung 48 unterbricht. Damit ist ein Flüssigkeitsrückfluß unterbunden, der unter Umständen den Drehkörper 32 hätte zurückdrehen können. Somit verbleibt der Drehkörper trotz einer auf eines der Räder einwirkenden Kraft in seiner jeweiligen Stellung und eine Lenkradrückdrehung ist ausgeschlossen.

Auch wenn das Rückschlagventil 60 nicht oder an anderer Stelle vorgesehen wäre, würden bei einem Rückdruck in der Leitung 16 und in der Signalleitung 48 unterschiedliche Drücke herrschen, da der Rückdruck in der Leitung 16 noch durch die Blende 37 a gedrosselt wird, in der Signalleitung 48 jedoch nicht.

Sobald der Rückdruck nicht mehr existent ist, wird eine Funktion, wie sie unter « Lenkbetätigung bei normalen Bedingungen » beschrieben wurde, eintreten.

Bei Lenkeinschlägen nach links treten die vorbeschriebenen Bedingungen analog ein.

**Patentansprüche**

1. Hydrauliksystem (10) mit einer Pumpe (12) mit unveränderlicher Fördermenge, einem Vorrangventil (44), einem Ventil (28) zum Steuern des Zuflusses zu einem bevorrechtigten Verbraucher (34), einer Zuführleitung (16) zu diesem Ventil (28) und einer Signalleitung (48), wobei das Vorrangventil (44) in Abhängigkeit von dem Druck in der Signalleitung (48) verstellbar ist, die Zuführleitung (16) an die Pumpe (12) sowie ein Sekundärkreis (24) an das Vorrangventil (44) angeschlossen sind und die Signalleitung (48) bei aus seiner Neutralstellung verschobenem Ventil (28) mit der Druckseite des bevorrechtigten Verbrauchers (34) verbunden ist, dadurch gekennzeichnet, daß die Zuführleitung (16) an das Ventil (28) angeschlossen ist und eine weitere Zuführleitung (22), in der das Vorrangventil (44) vorgesehen ist, die Pumpe (12) mit dem Sekundärkreis (24) verbindet, der ein Stellventil (38) aufweist, wobei das Vorrangventil (44) zwischen einer offenen und einer geschlossenen Stellung verstellbar und die Signalleitung (48) blockierbar ist, sobald der in ihr herrschende Druck größer ist als der über die Zuführleitung (16) zum bevorrechtigten Verbraucher (34) gelieferte Druck.

2. Hydrauliksystem nach Anspruch 1, dadurch gekennzeichnet, daß an der der Signalleitung (48) abgelegenen Seite des Vorrangventils (44) eine Pilotleitung angreift, die stromaufwärts des Vorrangventils (44) an die weitere Zuführleitung (22) angeschlossen ist und über deren Pilotdruck das Vorrangventil aus seiner geschlossenen Stellung in seine offene Stellung verschiebbar ist.

3. Hydrauliksystem nach Anspruch 1 oder 2, dadurch gekennzeichnet, daß ein Steuerventil (54) in der Signalleitung (48) vorgesehen, über den Druck in der ersten Zuführleitung (16) verstellbar ist und bei einem Druck in der Signalleitung (48), der größer ist als der Druck in der ersten Zuführleitung (16), in eine erste Stellung verstellbar ist, in der die Verbindung der Signalleitung (48) zwischen Vorrangventil (44) und Ventil (28) unterbrochen ist.

4. Hydrauliksystem nach Anspruch 3, dadurch gekennzeichnet, daß das Steuerventil (54) in seiner ersten Stellung die erste Zuführleitung (16) mit dem Abschnitt der Signalleitung (48) verbindet, der zwischen dem Steuerventil (54) und dem Vorrangventil (44) liegt.

5. Hydrauliksystem nach einem oder mehreren der vorherigen Ansprüche, wobei das Ventil (28) im Primärkreis (18) mit einer Rücklaufleitung (20) versehen ist, dadurch gekennzeichnet, daß das Stellventil (38) in seiner Neutralstellung die weitere Zuführleitung (22) über eine vierte Leitung (26) mit der Rücklaufleitung (20) verbindet.

## Claims

1. A hydraulic system (10) comprising a constant-delivery pump (12), a priority valve (44), a valve (28) for controlling the feed flow to a privileged load (34), a feed conduit (16) to said valve (28) and a signal conduit (48), wherein the priority valve (44) is displaceable in dependence on the pressure in the signal conduit (48), the feed conduit (16) is connected to the pump (12) and a secondary circuit (24) is connected to the priority valve (44), and the signal conduit (48) is connected to the pressure side of the privileged load (34) when the valve (28) is displaced out of its normal position, characterised in that the feed conduit (16) is connected to the valve (28) and a further feed conduit (22) in which the priority valve (44) is provided connects the pump (12) to the secondary circuit (24) which has a control valve (38), wherein the priority valve (44) is displaceable between an open and a closed position and the signal conduit (48) is blockable as soon as the pressure obtaining therein is greater than the pressure delivered by way of the feed conduit (16) to the privileged load (34).

2. A hydraulic system according to claim 1 characterised in that a pilot conduit is connected to the side of the priority valve (44) remote from the signal conduit (44) and is connected upstream of the priority valve (44) to the further feed conduit (22), the priority valve being displaceable from its closed position into its open position by way of the pilot pressure of the pilot conduit.

3. A hydraulic system according to claim 1 or claim 2 characterised in that a control valve (54) is provided in the signal conduit (48), is displaceable by way of the pressure in the first feed conduit (16) and, at a pressure in the signal conduit (48) which is greater than the pressure in the first feed conduit (16), is displaceable into a first position in which the communication of the signal conduit (48) between the priority valve (44) and the valve (28) is interrupted.

4. A hydraulic system according to claim 3 characterised in that in its first position the control valve (54) communicates the first feed conduit (16) with the portion of the signal conduit (48) which is between the control valve (54) and the priority valve (44).

5. A hydraulic system according to one or more of the preceding claims wherein the valve (28) in the primary circuit (18) is provided with a return conduit (20), characterised in that in its neutral position the control valve (38) communicates the further feed conduit (22) with the return conduit (20) by way of a fourth conduit (26).

## Revendications

1. Système hydraulique (10) comportant une pompe (12) à débit invariable, une valve prioritaire (44), une valve (28) pour la commande de l'admission à un appareil utilisateur de rang prioritaire (34), un conduit d'alimentation (16) vers cette valve (28) et un conduit de signaux (48), la valve prioritaire (44) étant déplaçable en fonction de la pression régnant dans le conduit de signaux (48), le conduit d'alimentation (16) étant raccordé à la pompe (12), ainsi qu'un circuit secondaire (24) à la valve prioritaire (44) et le conduit de signaux (48) étant, lorsque la valve (28) est écartée de sa position neutre, reliée au côté de pression de l'appareil utilisateur de rang prioritaire (34), caractérisé en ce que le conduit d'alimentation (16) est raccordé à la valve (28) et en ce qu'un autre conduit d'alimentation (22), dans lequel est prévue la valve prioritaire (44), relie la pompe (12) au circuit secondaire (24) qui comporte une valve de réglage ou positionnement (38), la valve prioritaire (44) étant déplaçable entre une position ouverte et une position fermée et le conduit de signaux (48) pouvant être bloqué dès que la pression qui y règne est supérieure à la pression fournie à l'appareil utilisateur de rang prioritaire (34) par l'intermédiaire du conduit d'alimentation (16).

2. Système hydraulique suivant la revendication 1, caractérisé en ce que le côté de la valve prioritaire (44) opposé au conduit de signaux (48) est relié à un conduit-pilote qui est relié, en amont de la valve prioritaire (44), à l'autre conduit d'alimentation (22) et par l'intermédiaire de la pression-pilote duquel la valve prioritaire peut être amenée de sa position fermée à sa position ouverte.

3. Système hydraulique suivant la revendication 1 ou 2, caractérisé en ce qu'il est prévu dans le conduit de signaux (48) une valve de commande (54) qui est déplaçable par l'intermédiaire de la pression régnant dans le premier conduit d'alimentation (16) et peut être amenée, pour une pression dans le conduit de signaux (48) supérieure à la pression dans le premier conduit d'alimentation (16), dans une première position dans laquelle la communication du conduit de signaux (48) entre la valve prioritaire (44) et la valve (28) est interrompue.

4. Système hydraulique suivant la revendication 3, caractérisé en ce que la valve de commande (54) relie, dans sa première position, le premier conduit d'alimentation (16) au tronçon du conduit de signaux (48) compris entre la valve de commande (54) et la valve prioritaire (44).

5. Système hydraulique suivant une ou plusieurs des revendications précédentes, la valve (28) prévue dans le circuit primaire (18) étant munie d'un conduit de retour (20), caractérisé en ce que la valve de réglage ou positionnement (38) fait communiquer, dans sa position neutre, l'autre conduit d'alimentation (22) avec le conduit de retour (20) par l'intermédiaire d'un quatrième conduit (26).

0 137 186

1